# EUROPEAN PATENT SPECIFICATION

(11) **EP 2 886 877 B1**
(45) Date of publication and mention of the grant of the patent: **03.01.2018**
(21) Application number: 14197255.4
(22) Date of filing: 10.12.2014
(51) Int. Cl.: F15B 11/028

(54) **Power beyond valve assembly for an agricultural implement**
Power-Beyond-Ventilanordnung für ein landwirtschaftliches Anbaugerät
Ensemble de soupape au-delà de la puissance pour un instrument agricole

(30) Priority: 13.12.2013 US 201314106232
(43) Date of publication of application: 24.06.2015
(73) Proprietor: CNH Industrial Italia S.p.A., 10135 Torino (IT)
(72) Inventor: Brinkley, Jerry L., Woodridge, IL Illinois 60517 (US); Stoever, Guy T., Minooka, IL Illinois 60447 (US); Restaino, III, Gerard, Dolton, IL 60419 (US)
(74) Representative: CNH Industrial IP Department

(56) References cited:
- WO-A1-2012/125320
- DE-A1-102004 033 316
- US-A1- 2011 139 260

## Description

### BACKGROUND

The invention relates generally to agricultural implements, and more particularly to a power beyond valve assembly for an agricultural implement.

A wide range of agricultural implements are known, are presently in use, and are particularly designed for towing behind a work vehicle, such as a tractor. In one family of such implements, which includes tillers, planters, and so forth, a wide swath of ground is tilled, planted, or otherwise worked via one or more passes of the implement. The implements may be hydraulically connected to the work vehicle, thereby enabling the work vehicle to drive various components of the implement, such as a hydraulic motor. Hydraulic fluid flow to the components of the implement may be provided by a power beyond system.

Certain implements may include seed drives, fan drives, and so forth that may be driven by hydraulic fluid. The work vehicle may supply the hydraulic fluid to the hydraulic systems of the implement via the power beyond system to facilitate operation of varying hydraulic functions of the implement. Operators typically set the power beyond system to output the maximum expected hydraulic pressure and fluid flow rate to the hydraulic system of the implement, thereby oversupplying hydraulic fluid when the hydraulic system is operating at a reduced load. Unfortunately, an oversupply of hydraulic fluid and pressure to the hydraulic system may generate excess heat in the work vehicle. Additionally, an oversupply of hydraulic fluid may reduce power available to operate other elements of the implement or the work vehicle. DE 10 2004 033 316 discloses a valve lay-out for lifting and lowering a three point hitch where a pressure relief valve can be controlled. Further disclosure of hydraulic systems using pressure compensation spool is done in WO 2012 125 320.

### BRIEF DESCRIPTION

The invention concerns a power beyond valve assembly according to claim 1. A power beyond valve assembly for an agricultural implement includes a pressure compensation spool that receives hydraulic fluid from a hydraulic supply and selectively provides the hydraulic fluid to a hydraulic system of the agricultural implement. The position of the pressure compensation spool is adjustable between an open position configured to facilitate flow of the hydraulic fluid to the hydraulic system and a closed position configured to block flow of the hydraulic fluid to the hydraulic system. Additionally, a first fluid connection provides the hydraulic fluid from an inlet of the hydraulic system to a first end of the pressure compensation spool to urge the pressure compensation spool toward the closed position. Further, a second fluid connection provides the hydraulic fluid from an outlet of the hydraulic system to a second end of the pressure compensation spool to urge the pressure compensation spool toward the open position. Furthermore, a pressure relief valve is fluidly coupled to the the outlet of the hydraulic system, and the pressure relief valve is adjustable to vary hydraulic pressure within the hydraulic system and within the second fluid connection.

In another embodiment, a power beyond valve assembly for an agricultural implement includes a valve block. The valve block includes a housing and a pressure compensation spool disposed within the housing and moveable between an open position and a closed position. Additionally, the pressure compensation spool receives hydraulic fluid from a hydraulic supply, to provide the hydraulic fluid to a hydraulic system of the agricultural implement while the pressure compensation spool is in the open position, and to block the hydraulic fluid to the hydraulic system while the pressure compensation spool is in the closed position. Further, a first fluid connection extending through the housing provides the hydraulic fluid from an inlet of the hydraulic system to a first end of the pressure compensation spool to urge the pressure compensation spool toward the closed position. Furthermore, a second fluid connection extending through the housing provides the hydraulic fluid from an outlet of the hydraulic system to a second end of the pressure compensation spool to urge the pressure compensation spool toward the open position. Moreover, a pressure relief valve disposed within the housing is fluidly coupled to the outlet of the hydraulic system, and the pressure relief value is adjustable to vary hydraulic pressure within the hydraulic system and within the second fluid connection.

In yet another embodiment, a power beyond valve assembly for an agricultural implement includes a pressure relief valve fluidly coupled to an outlet of a hydraulic system. The pressure relief valve is adjustable to vary hydraulic pressure within the hydraulic system and at the outlet. Additionally, the power beyond valve assembly includes a pressure compensation spool fluidly coupled to an inlet of the hydraulic system. Further, the pressure compensation spool blocks flow of hydraulic fluid to the inlet while the hydraulic pressure at the inlet exceeds the hydraulic pressure at the outlet by a threshold value. Furthermore, the pressure compensation spool facilitates flow of the hydraulic fluid to the inlet.

### DRAWINGS

These and other features, aspects, and advantages of the present invention will become better understood when the following detailed description is read with reference to the accompanying drawings in which like characters represent like parts throughout the drawings, wherein:
FIG. 1 is a perspective view of an embodiment of an agricultural implement coupled to a work vehicle;
FIG. 2 is a diagrammatical representation of an embodiment of a hydraulic circuit that may be employed within the work vehicle and the agricultural implement of FIG. 1;
FIG. 3 is a schematic diagram of an embodiment of a power beyond valve assembly that may be employed within the hydraulic circuit of FIG. 2;
FIG. 4 is a schematic diagram of an alternative embodiment of a power beyond valve assembly, including an actuator to control pressure of hydraulic fluid within a hydraulic system of an agricultural implement;
FIG. 5 is a cross-sectional view of an embodiment of a valve block including a pressure compensation spool in an open position; and
FIG. 6 is a cross-sectional view of the valve block of FIG. 5 with the the pressure compensation spool in a closed position.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Embodiments of the power beyond valve assembly described herein may facilitate control of a hydraulic fluid flow between a hydraulic pump in a work vehicle and a hydraulic motor within an agricultural implement. In certain embodiments, the hydraulic pump of the work vehicle directs hydraulic fluid to the hydraulic motor of the implement to drive a hydraulically powered function of the agricultural implement (e.g., a seed drive, a fan drive, a vacuum system, etc.). The hydraulic motor may rotate at a desired speed based on a flow rate and/or a pressure of hydraulic fluid through the motor. In certain embodiments, a pressure compensation spool of the power beyond valve assembly receives the hydraulic fluid from a hydraulic supply and selectively distributes the hydraulic fluid to a hydraulic system of the agricultural implement, which includes the hydraulic motor. Subsequently, the hydraulic motor of the hydraulic system receives the hydraulic fluid, utilizes the energy of the fluid to drive the motor to rotate, and returns the hydraulic fluid to the work vehicle. A pressure within a line that receives the hydraulic fluid from the motor may be controlled via a relief valve. As such, the relief valve enables a user to regulate the pressure of the hydraulic fluid within the hydraulic motor using a pressure compensation spool. When the relief valve relieves pressure at an output of the hydraulic motor, a pressure differential between an input of the hydraulic motor and the output of the hydraulic motor urges the pressure compensation spool to move from an open position to a closed position. While the pressure compensation spool is in the closed position, the hydraulic fluid from the power beyond system stops flowing until the pressure compensation spool moves back to an open position. Control of the hydraulic flow rate and hydraulic pressure increases efficiency of the agricultural implement and the respective hydraulic components by decreasing energy losses (e.g., in the form of heat generation, vibration, etc.) from an oversupply of hydraulic fluid flow. Accordingly, the power beyond valve assembly may reduce the wear on the work vehicle, the agricultural implement, and the respective hydraulic components, and/or increase fuel efficiency of the work vehicle.

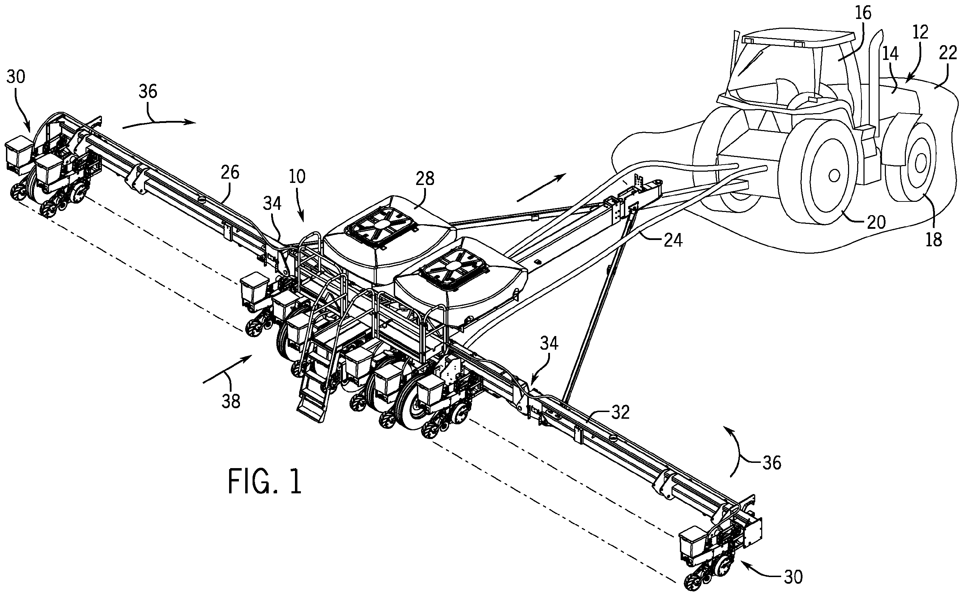

Turning now to the drawings, FIG. 1 is a perspective view of an embodiment of an agricultural implement 10 and a work vehicle 12. The illustrated work vehicle 12 has a body 14 that houses an engine, transmission (e.g., gear box), cooling system, and power train. The work vehicle 12 has a cabin 16 where an operator may sit or stand to operate the vehicle 12. The work vehicle 12 has two front wheels 18 and two rear wheels 20 that rotate to move the work vehicle 12 along the ground 22 at a ground speed. In some embodiments, the work vehicle 12 may have tracks rather than one or both sets of wheels 18, 20.

The agricultural implement 10 (e.g., planter) is towed behind the work vehicle 12 across the ground 22, as shown in FIG. 1. The work vehicle 12 supplies a working fluid (e.g., hydraulic fluid) to the agricultural implement via one or more fluid lines 24. One or more motors (e.g., hydraulic motors) receive the working fluid from the work vehicle 12 and drive systems of the agricultural implement 10. For example, one or more hydraulic motors may drive a fan and/or seed drive to direct agricultural material (e.g., seeds, fertilizer, etc.) along supply lines 26 from tanks 28 to multiple row units 30 distributed along a frame assembly 32. Each row unit 30 may be configured to deposit seeds at a desired depth beneath the soil surface, thereby establishing rows of planted seeds.

The agricultural implement 10 may have a variety of systems driven by the working fluid (e.g., hydraulic fluid) supplied by the work vehicle 12. For example, motors of the agricultural implement may be driven by the working fluid to facilitate delivery of the agricultural product and/or may establish a vacuum pressure within the tanks 28 or supply lines. In some embodiments, the frame assembly 32 of the agricultural implement 10 may be adjustable to fold into a transport configuration (e.g., via rotation of wings about joints 34) as shown by arrows 36 and/or to pivot and align the frame assembly 32 with a direction of travel 38.

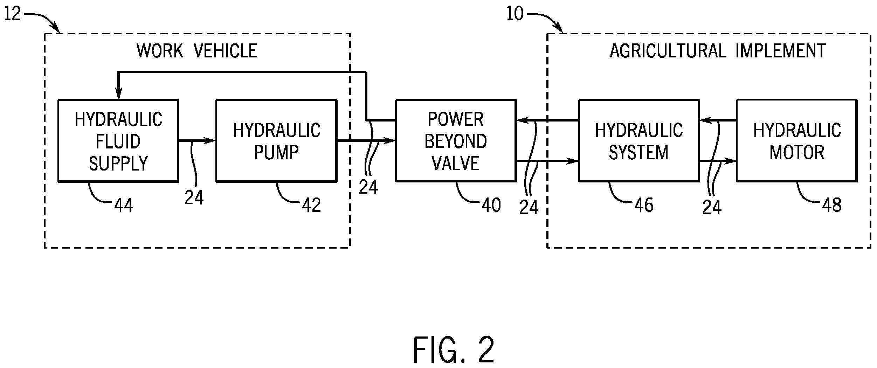

FIG. 2 is a diagrammatical representation of an embodiment of a hydraulic circuit that may be employed within the work vehicle 12 and the agricultural implement 10. In the illustrated embodiment, the work vehicle 12 includes a hydraulic pump 42, which provides hydraulic fluid flow to the hydraulic components of the agricultural implement 10. Additionally, the work vehicle 12 also includes a hydraulic fluid supply 44, which provides the hydraulic fluid to the hydraulic pump 42. Further, the hydraulic pump 42 and the hydraulic fluid supply 44 are fluidly coupled by a fluid line 24.

In the illustrated embodiment, the work vehicle 12 provides the hydraulic fluid flow to the agricultural implement 10 via a power beyond valve assembly 40. The power beyond valve assembly 40 may be used to control functions on the agricultural implement 10, including seed drives, fan drives, and so forth. As illustrated, the hydraulic fluid flows from the work vehicle 12 to the agricultural implement 10 via fluid lines 24 coupled to the power beyond valve assembly 40. The power beyond valve assembly 40 facilitates hydraulic coupling of the agricultural implement 10 to the work vehicle 12. The hydraulic fluid flows through the power beyond valve assembly 40 to the hydraulic system 46 of the agricultural implement 10. The power beyond valve assembly 40 may provide a mechanism that allows the agricultural implement 10 to limit the hydraulic fluid flow and pressure received from the power beyond system of the work vehicle 12. As such, limiting the hydraulic flow and pressure entering the agricultural implement 10 may provide an increase in power in the agricultural implement 10, and it may reduce energy lost through heat generation caused by the inefficiencies of receiving hydraulic fluid flow and pressure beyond an ideal hydraulic fluid flow and pressure for the agricultural implement 10.

Subsequently, the hydraulic system 46 distributes hydraulic fluid to a hydraulic motor 48 of the agricultural implement 10 via a fluid line 24 at a flow rate sufficient to drive the hydraulic motor 48. The hydraulic motor 48 may power at least one function of the agricultural implement 10, such as a seed drive, a fan drive, a vacuum system, and so forth. After the hydraulic fluid drives the hydraulic motor 48, the hydraulic fluid returns to the hydraulic system 46 via a fluid line 24. From the hydraulic system 46, the hydraulic fluid may return to the hydraulic fluid supply 44 of the work vehicle 12 through the fluid lines 24 by way of the power beyond valve assembly 40. While the power beyond valve assembly 40 is described herein as being between the work vehicle 12 and the agricultural implement 10, it may be noted that the power beyond valve assembly 40 may be part of the agricultural implement 10, the work vehicle 12, or it may be positioned at any other suitable location between the work vehicle 12 and the agricultural implement 10.

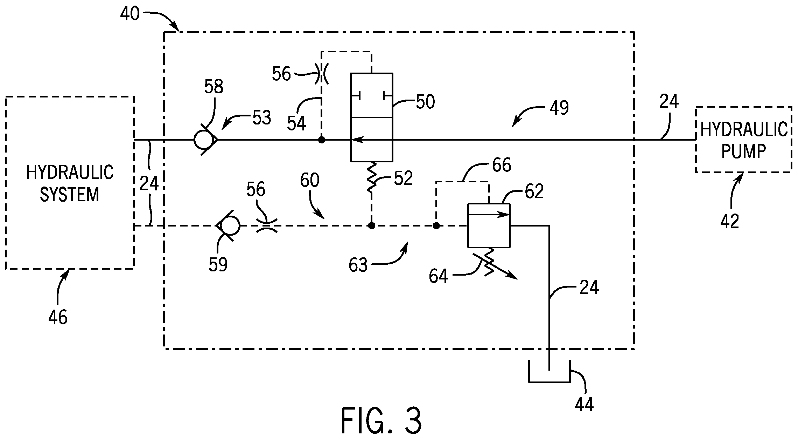

FIG. 3 is a schematic diagram of an embodiment of the hydraulic system 46. In certain embodiments, the power beyond valve assembly 40 may include a valve block that controls hydraulic fluid flow and pressure to the hydraulic system 46. Furthermore, the power beyond valve assembly 40 may be coupled to the agricultural implement 10, the work vehicle 12, or any suitable location between the agricultural implement 10 and the work vehicle 12.

In the illustrated embodiment, the hydraulic pump 42 provides the hydraulic fluid flow to the power beyond valve assembly 40 via the fluid line 24. A hydraulic line 49 of the power beyond valve assembly 40 receives the hydraulic fluid from the line 24 and directs the hydraulic fluid toward a pressure compensation spool 50. The pressure compensation spool 50 may be linearly moveable between an open position and a closed position. In another embodiment, the pressure compensation spool 50 may be rotationally moveable between the open and closed positions. The open position enables hydraulic fluid to flow to the hydraulic system 46. On the other hand, while the pressure compensation spool 50 is in the closed position, the hydraulic fluid flow into the hydraulic system 46 is blocked, thereby enabling excess pressure within the hydraulic system to be discharged through an outlet.

Once the hydraulic fluid passes through the pressure compensation spool 50, the hydraulic fluid flows through a hydraulic line 53 to an inlet of the hydraulic system 46. A pilot line 54 extends from the hydraulic line 53 to a first end of the pressure compensation spool 50. Pressure in the pilot line 54, after passing through a flow restrictor 56, urges the pressure compensation spool 50 to move toward the closed position. As will be discussed in greater detail below, if a force associated with the pressure in the pilot line 54 exceeds the combined force of a spring 52 and a force associated with a pressure in a pilot line 60 extending between the hydraulic system 46 outlet and a spring chamber of the pressure compensation spool 50, the pressure compensation spool 50 is driven to the closed position, thereby blocking flow to the hydraulic system 46 inlet. The spring 52 provides a force that urges the pressure compensation spool 50 into the open position. Accordingly, the pressure compensation spool 50 may remain in the open position while the force associated with the pressure in the hydraulic line 53 remains below the force contributed by the spring 52 and the force associated with the pressure in the pilot line 60, thereby enabling flow of the hydraulic fluid to the hydraulic system inlet.

Further, check valves 58 and 59 are configured to limit the hydraulic fluid flow to one direction. A first check valve 58 blocks fluid flow from flowing from the hydraulic system 46 inlet to the pressure compensation spool 50, while facilitating flow from the pressure compensation spool 50 to the hydraulic system 46 inlet. The second check valve 59 blocks fluid flow from flowing from the spring chamber of the pressure compensation spool 50 to the hydraulic system 46 outlet, while facilitating flow from the hydraulic system 46 outlet to the spring chamber. The check valves 58 and 59 may include any suitable check valve configuration to facilitate one-way flow of the hydraulic fluid. As such, the check valves 58 and 59 may be standard ball check valves, spring-loaded ball check valves, diaphragm check valves, and so forth.

The hydraulic fluid flows through the hydraulic system 46 to the hydraulic motor 48, thereby driving the hydraulic motor 48 in rotation. The hydraulic fluid then returns to the hydraulic system 46, and the hydraulic fluid is expelled from the hydraulic system 46 via the outlet. From the outlet of the hydraulic system 46, the hydraulic fluid flows toward a relief valve 62 via pilot lines 60 and 63. As illustrated, the pilot line 63 is in hydraulic communication with the pilot line 60. As such, a pressure within the pilot line 63 may be equal to the pressure within the pilot line 60. Additionally, the relief valve 62 is configured to vary the hydraulic fluid pressure within the hydraulic system 46 by controlling pressure within the pilot lines 60 and 63. For example, if the relief valve 62 is in a completely open position, the relief valve may reduce the pressure in the pilot lines 60 and 63 by enabling a substantial portion of the hydraulic fluid to return to the hydraulic fluid supply. On the other hand, as the relief valve 62 is adjusted toward a closed position, the pressure in the pilot lines 60 and 63 increases, thereby increasing pressure within the hydraulic system. The pressure in the pilot lines 60 and 63 urges the pressure compensation spool 50 toward the open position. As such, increasing the pressure of the pilot lines 60 and 63 by adjusting the relief valve 62 toward the closed position increases the pressure of the pilot line 54 and the hydraulic line 53 going into the inlet of the hydraulic system 46. An increase in the pressure of the pilot line 54 urges the pressure compensation spool 50 into the closed position. When the pressure compensation spool 50 is in the closed position, flow of the hydraulic fluid to the hydraulic system is blocked. While the flow of hydraulic fluid is blocked, built up pressure in the hydraulic fluid line 53 is dissipated until the force exerted on the pressure compensation spool 50 by the pressure in the pilot line 54 falls below the force exerted on the pressure compensation spool 50 in the opposite direction by the spring 52 and the force associated with the pressure of pilot lines 60 and 63. Once the pressure of the pilot line 54 reaches this point, the pressure compensation spool 50 is again urged into the open position.

Furthermore, the relief valve 62, in at least the illustrated embodiment, is controlled manually by an adjustable pressure spring 64. A force exerted on the relief valve 62 by the adjustable pressure spring 64 may be controlled by an operator of the work vehicle 12 based on a desired hydraulic pressure within the hydraulic system 46 of the agricultural implement 10. By adjusting the adjustable pressure spring 64, the relief valve 62 may open at a higher or lower pressure, thereby controlling the pressure within the pilot lines 60, 63, and 54. Once the hydraulic fluid passes through the relief valve 62, a fluid line 24 carries the hydraulic fluid back to the hydraulic fluid supply 44 for subsequent use as a hydraulic fluid source for the hydraulic pump 42.

Accordingly, the pressure relief valve 62 may control hydraulic fluid pressure within the hydraulic motor 48, thereby controlling a rotation speed of the hydraulic motor 48. As the pressure relief valve 62 opens, the pressure of the hydraulic fluid leaving the hydraulic system 46 may be reduced. As such, the pressure in pilot lines 60 and 63 may be reduced. When the pressure in pilot lines 60 and 63 is reduced, less force is exerted on a spring side of the pressure compensation spool 50. At some point, the pressure in pilot line 54 may reach a value where its associated force exerted on the pressure compensation spool is greater than the force exerted on the spring side of the pressure compensation spool 50. When this happens, the pressure compensation spool 50 will be urged into the closed position until the pressure in the pilot line 54 is dissipated. By controlling the pressure in pilot lines 60 and 63, the pressure relief valve 62 also causes the pressure compensation spool 50 to control the flow of the hydraulic fluid entering the power beyond valve assembly 40. Further, when a pressure differential between the hydraulic line 53 and the pilot lines 60 and 63 is created, the hydraulic motor 48 may run more efficiently due to a limited amount of pressure built up in an output of the hydraulic motor 48. The high to low pressure differential of the inlet and the outlet of the hydraulic system 46 allows the hydraulic motor 48 to rotate. For example, the operator of the work vehicle 12 may control the rotations per minute (RPM) of the hydraulic motor 48 of the agricultural implement 10 by adjusting the adjustable pressure spring 64 of the relief valve 62. By way of example, an operator may adjust the adjustable pressure spring 64 to reduce the pressure within the pilot lines 60 and 63. When the pressure of lines 60 and 63 is reduced, more power may be available to drive the hydraulic motor 48. Therefore, the hydraulic motor 48 may operate at a higher RPM. Conversely, when the pressure of lines 60 and 63 is increased by adjusting the adjustable pressure spring 64, less power may be available to drive the hydraulic motor 48, and the hydraulic motor 48 may operate at a lower RPM.

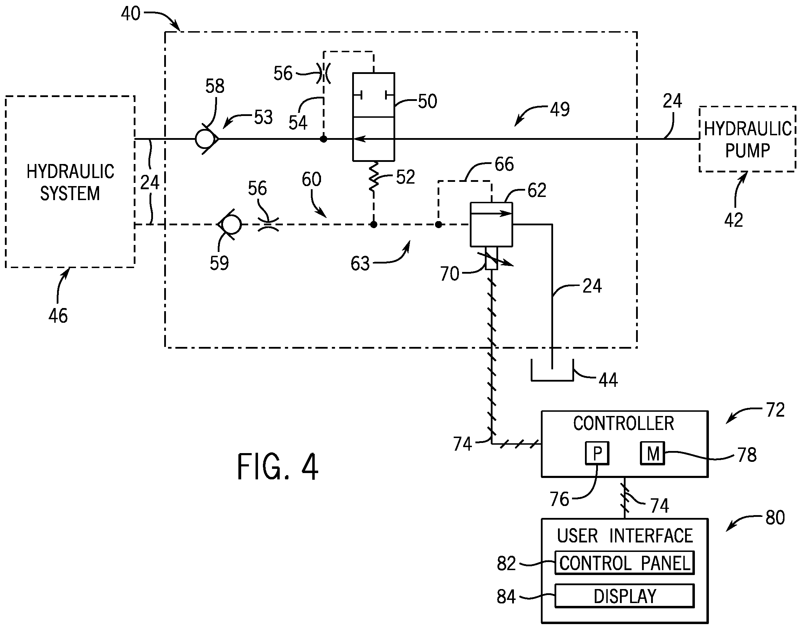

As such, the operator of the work vehicle 12 may manually control the pressure of the adjustable pressure spring 64. For example, an operator may deactivate hydraulic flow to the implement, and manually adjust the adjustable pressure spring 64 at the power beyond valve assembly 40. However, FIG. 4 shows another system that may be used to adjust the relief valve 62. FIG. 4 displays a schematic diagram of an alternative embodiment of a power beyond valve assembly 40 with an actuator controlling the relief valve 62. As illustrated, a solenoid 70 is in electrical communication with a controller 72 via a wire 74. Additionally, the solenoid 70, as illustrated, is a proportional actuator. The solenoid 70 in a proportional configuration enables the movement of the pressure relief valve 62 proportional to an electric current flowing into the solenoid 70. Further, the controller 72 controls the solenoid 70, thereby driving the relief valve 62 to change positions, which enables variable hydraulic fluid flows through the relief valve 62.

In the illustrated embodiment, the controller 72 includes a processor 76 and a memory 78. The processor 76 may perform instructions stored in the memory 78. The instructions may include programs that instruct the solenoid 70 to control the relief valve 62. Additionally, the instructions may be carried out based on an input from a user interface 80. As illustrated, the user interface 80 is electrically coupled to the controller 72 via a wire 74. Further, the user interface 80 includes a control panel 82, which enables an operator of the work vehicle 12 to input commands to the controller 72. The user interface 80 includes a display 84 to display information to the user. Such information that may be displayed to the user could include the hydraulic flow and pressure through the system, the RPM of the hydraulic motor 48, and any other value that may be of use to the user in determining how to control the relief valve 62.

Further, the input from the user interface 80 may instruct the controller to adjust the position of the relief valve 62. The input may be provided by the user of the work vehicle 12 based on RPM specifications of the hydraulic motor 48 of the agricultural implement 10. If the user determines that the RPM of the hydraulic motor 48 is either above or below a desired rate, then the operator may indicate to the controller 72 via the user interface to adjust the relief valve 62 to increase or decrease the RPM of the hydraulic motor 48. Furthermore, the solenoid 70 may enable the user of the work vehicle 12 to control the relief valve 62 from the cabin 16 of the work vehicle 12. For example, instead of the user of the work vehicle 12 manually adjusting the relief valve 62 at the location of the power beyond valve assembly 40, the user may adjust the relief valve 62 from the user interface 80, which may be positioned at any suitable location. As such, using the solenoid 70 to control the relief valve 62 may provide greater efficiency in operating the agricultural implement 10, as compared to manually adjusting an adjustable pressure spring 64 on the relief valve 62. Further, while the illustrated embodiment shows the solenoid 70 controlling the relief valve 62, it may be noted that any type of actuator capable of controlling the relief valve 62 may be used.

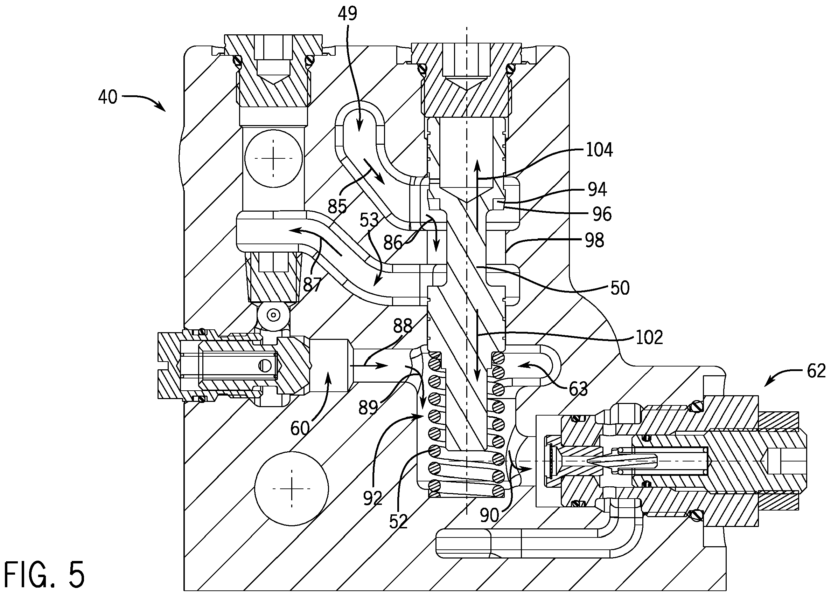

Turning now to FIG. 5, the power beyond valve assembly 40 is represented by a cross-sectional view of an embodiment of a valve block with the pressure compensation spool 50 in the open position. In the illustrated embodiment, the hydraulic flow enters the valve block at the hydraulic line 49 and flows through the hydraulic line 49 in a direction 85. While the pressure compensation spool 50 is in the open position, as illustrated, the hydraulic fluid flows past the pressure compensation spool 50 in a direction 86 and into the hydraulic line 53. The hydraulic fluid then exits the power beyond valve assembly 40 in a direction 87 through the hydraulic line 53 (e.g., toward a hydraulic motor). After the hydraulic fluid passes through the hydraulic system 46, the hydraulic fluid returns to the power beyond valve assembly 40 at the pilot line 60 and flows in a direction 88. Subsequently, the hydraulic fluid enters a spring chamber 92 where the fluid provides pressure to act with the spring 52 to urge the pressure compensation spool 50 toward the open position. Subsequently, the hydraulic fluid flows through the spring chamber 92 in directions 89 and 90. Further, the hydraulic fluid flowing in the direction 90 enters the relief valve 62 and exits the power beyond valve assembly 40 toward the hydraulic fluid supply 44 (not shown). Additionally, a force acting on the other side of the pressure compensation spool 50 from the spring chamber 92 is provided by the pressure of the pilot line 54 (not shown). When a differential pressure between the hydraulic line 53 and the pilot line 60 exceeds a determined threshold, the pressure in the pilot line 54 will urge the pressure compensation spool 50 toward the closed position.

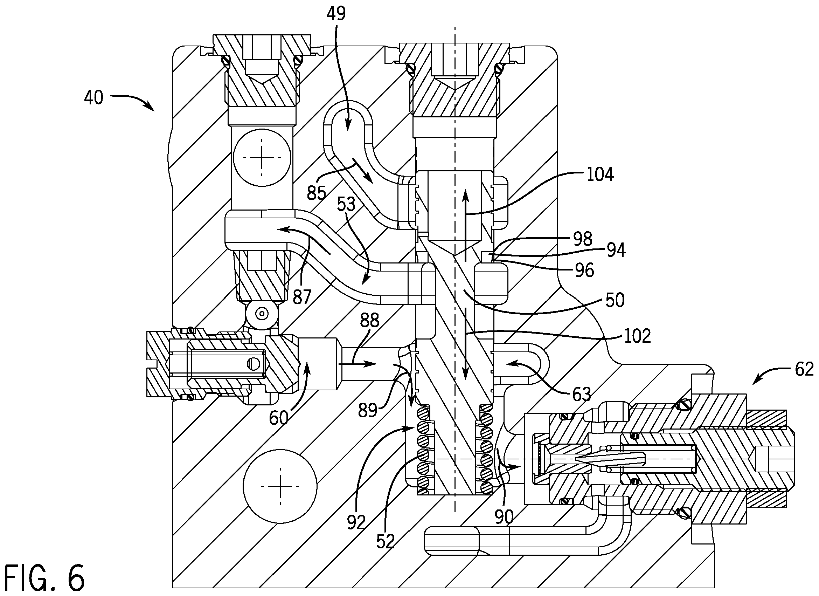

Moreover, a notch 94 is illustrated in the pressure compensation spool 50. The notch 94 allows the flow of the hydraulic fluid to gradually increase or decrease as the pressure compensation spool 50 moves between the open position and the closed position. Further, when the pressure compensation spool 50 is in the closed position, a seal between a contact point 96 on the pressure compensation spool 50 and a contact point 98 on the valve block of the power beyond valve assembly 40 blocks the flow of hydraulic fluid toward hydraulic line 53. FIG. 6 illustrates a cross-sectional view of the valve block of FIG. 5 with the pressure compensation spool 50 in the closed position after being urged in a direction 102. With the pressure compensation spool in the closed position, the contact point 96 of the o-ring 94 and the contact point 98 of the valve block are in contact with one another, thereby creating a seal between the contact points 96 and 98. The seal blocks the hydraulic fluid flow in the direction 85 from entering the hydraulic line 49. As discussed above, the pressure compensation spool 50 blocks the hydraulic fluid flow when the force associated with the pressure in the fluid line 53 exceeds the combined force from the spring 52 and the force associated with the pressure in the pilot lines 60 and 63. Blocking the hydraulic fluid flow from entering the hydraulic motor may limit the flow rate of hydraulic fluid at the hydraulic line 53 until pressure in the hydraulic line 53 is dissipated to a desired level. Upon achieving the desired pressure in the pilot lines 60 and 63 set by the relief valve 62, the pressure compensation spool 50 will move in a direction 104 to the open position and allow the flow of hydraulic fluid to resume. The pressure compensation spool 50 may re-open based on the decrease in the pressure differential that earlier forced the pressure compensation spool 50 into the closed position.

Further, in both FIGS. 5 and 6, the relief valve 62 is shown as a physical embodiment of the schematic diagram illustrated in FIG. 3. As such, FIGS. 4 and 5 are illustrated with the pressure relief valve 62 controllable using the adjustable pressure spring 64. It may be noted that the adjustable pressure spring 64 may be replaced in certain embodiments with the solenoid 70 discussed above. Replacing the adjustable pressure spring 64 with the solenoid 70 enables the operator to control the relief valve 62 from the cabin 16 of the work vehicle

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A power beyond valve assembly (40) for an agricultural implement (10), comprising:
- a pressure compensation spool (50) configured to receive hydraulic fluid from a hydraulic supply (44) and to selectively provide the hydraulic fluid to a hydraulic system (46) of the agricultural implement, wherein a position of the pressure compensation spool (50) is adjustable between an open position configured to facilitate flow of the hydraulic fluid to the hydraulic system (46) and a closed position configured to block flow of the hydraulic fluid to the hydraulic system (46);
- a first fluid connection configured to provide the hydraulic fluid from an inlet of the hydraulic system (46) to a first end of the pressure compensation spool (50) to urge the pressure compensation spool (50) toward the closed position;
- a second fluid connection configured to provide the hydraulic fluid from an outlet of the hydraulic system (46) to a second end of the pressure compensation spool (50) to urge the pressure compensation spool (50) toward the open position; and **characterized by**
- a pressure relief valve (62) fluidly coupled to the outlet of the hydraulic system (46), wherein the pressure relief value (62) is adjustable to vary hydraulic pressure within the hydraulic system (46) and within the second fluid connection.

2. The power beyond valve assembly (40) of claim 1, wherein the pressure relief valve (62) is manually adjustable.

3. The power beyond valve assembly (40) of claim 1, wherein the pressure relief valve (62) comprises an actuator (70) configured to adjust the pressure relief valve (62).

4. The power beyond valve assembly (40) of claim 3, wherein the actuator (70) is configured to adjust the pressure relief valve (62) to establish at least three different hydraulic pressures within the second fluid connection.

5. The power beyond valve assembly (40) of claim 3, comprising a controller (72) communicatively coupled to the actuator (70), wherein the actuator (70) is controllable via a set of instructions stored in a memory of the controller (78), and the set of instructions is executed by a processor of the controller (76) and transmitted to the actuator (70).

6. The power beyond valve assembly (40) of claim 5, comprising a user interface (80) communicatively coupled to the controller (72) and configured to receive an operator input to control the pressure relief valve (62).

7. The power beyond valve assembly (40) of claim 6, wherein the user interface is controllable from a cabin (16) of a work vehicle.

8. The power beyond valve assembly (40) of claim 1, wherein the pressure relief valve (62) is adjustable to maintain a desired rotations per minute (RPM) of a hydraulic motor of the hydraulic system.

## Patentansprüche

1. Power-Beyond-Ventilanordnung (40) für ein landwirtschaftliches Anbaugerät (10) mit:
- einem Druckausgleichskolben (50), der dazu eingerichtet ist, Hydraulikfluid aus einem Hydraulikvorrat (44) zu erhalten und wahlweise das Hydraulikfluid einem Hydrauliksystem (46) des landwirtschaftlichen Anbaugeräts bereitzustellen, wobei eine Position des Druckausgleichskolbens (50) zwischen einer offenen Position, die dazu eingerichtet ist, den Fluss des Hydraulikfluids zu dem Hydrauliksystem (46) zu ermöglichen, und einer geschlossenen Position, die dazu eingerichtet ist, den Fluss des Hydraulikfluids zu dem Hydrauliksystem (46) zu blockieren, einstellbar ist;
- einer ersten Fluidverbindung, die dazu eingerichtet ist, das Hydraulikfluid von einem Einlass des Hydrauliksystems (46) zu einem ersten Ende des Druckausgleichskolbens (50) bereitzustellen, um den Druckausgleichskolben (50) in die geschlossene Position hin zu zwingen;
- einer zweiten Fluidverbindung, die dazu eingerichtet ist, das Hydraulikfluid von einem Auslass des Hydrauliksystems (46) zu einem zweiten Ende des Druckausgleichskolbens (50) bereitzustellen, um den Druckausgleichskolben (50) in die offene Position hin zu zwingen; und
**gekennzeichnet durch**
- ein Druckentlastungsventil (62), das fluidmäßig mit dem Auslass des Hydrauliksystems (46) gekoppelt ist, wobei das Druckentlastungsventil (62) einstellbar ist, um den hydraulischen Druck innerhalb des Hydrauliksystems (46) und innerhalb der zweiten Fluidverbindung zu variieren.

2. Power-Beyond-Ventilanordnung (40) nach Anspruch 1, wobei das Druckentlastungsventil (62) manuell einstellbar ist.

3. Power-Beyond-Ventilanordnung (40) nach Anspruch 1, wobei das Druckentlastungsventil (62) ein Stellglied (70) aufweist, das dazu eingerichtet ist, das Druckentlastungsventil (62) einzustellen.

4. Power-Beyond-Ventilanordnung (40) nach Anspruch 3, wobei das Stellglied (70) dazu eingerichtet ist, das Druckentlastungsventil (62) einzustellen, um mindestens drei unterschiedliche Hydraulikdrücke innerhalb der zweiten Fluidverbindung aufzubauen.

5. Power-Beyond-Ventilanordnung (40) nach Anspruch 3, die eine Steuereinrichtung (72) aufweist, die kommunikativ mit dem Stellglied (70) gekoppelt ist, wobei das Stellglied (70) über einen Befehlssatz steuerbar ist, der in einem Speicher der Steuereinrichtung (78) gespeichert ist, und wobei der Befehlssatz von einem Prozessor der Steuereinrichtung (76) ausgeführt und zu dem Stellglied (70) übertragen wird.

6. Power-Beyond-Ventilanordnung (40) nach Anspruch 5, die des Weiteren eine Benutzerschnittstelle (80) aufweist, die kommunikativ mit der Steuereinrichtung (72) gekoppelt ist und dazu eingerichtet ist, eine Bedienereingabe zu empfangen, um das Druckentlastungsventil (62) zu steuern.

7. Power-Beyond-Ventilanordnung (40) nach Anspruch 6, wobei die Benutzerschnittstelle von einer Kabine (16) eines Arbeitsfahrzeugs steuerbar ist.

8. Power-Beyond-Ventilanordnung (40) nach Anspruch 1, wobei das Druckentlastungsventil (62) einstellbar ist, um eine gewünschte Umdrehungszahl (RPM) eines Hydraulikmotors des Hydrauliksystems aufrechtzuerhalten.

## Revendications

1. Ensemble de soupape de transfert haute pression [power beyond valve assembly] (40) pour un outil agricole (10), comprenant :
- un tiroir de compensation de pression (50) conçu pour recevoir un fluide hydraulique d'une alimentation hydraulique (44) et pour fournir sélectivement le fluide hydraulique à un système hydraulique (46) de l'outil agricole, dans lequel une position du tiroir de compensation de pression (50) est réglable entre une position ouverte conçue pour permettre l'écoulement du fluide hydraulique jusqu'au système hydraulique (46) et une position fermée conçue pour empêcher l'écoulement du fluide hydraulique vers le système hydraulique (46),
- une première connexion de fluide conçue pour fournir le fluide hydraulique d'une entrée du système hydraulique (46) jusqu'à une première extrémité du tiroir de compensation de pression (50) afin de pousser le tiroir de compensation de pression (50) vers la position fermée,
- une seconde connexion de fluide conçue pour fournir le fluide hydraulique d'une sortie du système hydraulique (46) jusqu'à une seconde extrémité du tiroir de compensation de pression (50) afin de pousser le tiroir de compensation de pression (50) vers la position ouverte, et **caractérisé par**
- une soupape de décompression (62) couplée fluidiquement à la sortie du système hydraulique (46), la soupape de décompression (62) étant réglable pour faire varier la pression hydraulique à l'intérieur du système hydraulique (46) et à l'intérieur de la seconde connexion de fluide.

2. Ensemble de soupape de transfert haute pression (40) selon la revendication 1, dans lequel la soupape de décompression (62) est réglable manuellement.

3. Ensemble de soupape de transfert haute pression (40) selon la revendication 1, dans lequel the pressure relief valve (62) comprises un actionneur (70) conçu pour régler la soupape de décompression (62).

4. Ensemble de soupape de transfert haute pression (40) selon la revendication 3, dans lequel l'actionneur (70) est conçu pour régler la soupape de décompression (62) pour instaurer au moins trois pressions hydrauliques différentes à l'intérieur de la seconde connexion de fluide.

5. Ensemble de soupape de transfert haute pression (40) selon la revendication 3, comprenant un contrôleur (72) couplé en communication à l'actionneur (70), l'actionneur (70) pouvant être commandé via un ensemble d'instructions stockées dans une mémoire du contrôleur (78), et l'ensemble d'instructions étant exécuté par un processeur du contrôleur (76) et transmis à l'actionneur (70).

6. Ensemble de soupape de transfert haute pression (40) selon la revendication 5, comprenant une interface utilisateur (80) couplée en communication au contrôleur (72) et conçue pour recevoir une entrée d'utilisateur pour commander la soupape de décompression (62).

7. Ensemble de soupape de transfert haute pression (40) selon la revendication 6, dans lequel l'interface utilisateur peut être commandée d'une cabine (16) d'un véhicule de travail.

8. Ensemble de soupape de transfert haute pression (40) selon la revendication 1, dans lequel la soupape de décompression (62) est réglable pour maintenir un régime de tours par minutes (RPM) souhaité d'un moteur hydraulique du système hydraulique.
